Europäisches Patentamt

European Patent Office

Office européen des brevets

(19)

(11) Veröffentlichungsnummer : **0 143 394**
**B1**

(12) **EUROPÄISCHE PATENTSCHRIFT**

(45) Veröffentlichungstag der Patentschrift :
26.04.89

(51) Int. Cl.⁴ : **B 60 B   1/04**

(21) Anmeldenummer : 84113723.5

(22) Anmeldetag : 14.11.84

(54) Speichenrad.

(30) Priorität : 25.11.83 DE 3342608

(43) Veröffentlichungstag der Anmeldung :
05.06.85 Patentblatt 85/23

(45) Bekanntmachung des Hinweises auf die Patenterteilung : 26.04.89 Patentblatt 89/17

(84) Benannte Vertragsstaaten :
FR GB IT

(56) Entgegenhaltungen :
BE--A--   478 967
DE--C--   534 351
FR--A-- 2 170 161
US--A-- 4 240 483
PATENT ABSTRACTS OF JAPAN, Band 9, Nr. 242 (M-
417)[1965], 28. September 1985; & JP-A-60 94 801
(FUJI SEIKOU K.K.) 28. Mai 1985
PATENT ABSTRACTS OF JAPAN, Band 9, Nr. 128 (M-
384)[1851], 4. Juni 1985; & JP-A-60 12 312 (YAMAHA
HATSUDOKI K.K.) 22. Januar 1985

(73) Patentinhaber : BAYERISCHE MOTOREN WERKE
Aktiengesellschaft
Postfach 40 02 40
D-8000 München 40 (DE)

(72) Erfinder : Hinsberg, René
Häberländerstrasse 3
D-8426 Altmannstein (DE)
Erfinder : Poschner, Markus
Südring 24
D-8069 Schweitenkirchen (DE)

(74) Vertreter : Dexheimer, Rolf
Bayerische Motoren Werke Aktiengesellschaft Postfach 40 02 40 Petuelring 130 - AJ-31
D-8000 München 40 (DE)

## Beschreibung

Die Erfindung bezieht sich auf ein Speichenrad der im Oberbegriff des Patentanspruchs genannten Art, welche aus der DE-C-534 351 hervorgeht.

Das in der erwähnten Druckschrift offenbarte Speichenrad besteht aus einer Radnabe und einer einteiligen Felge. Diese sind miteinander durch eine Anzahl von sich kreuzenden Speichen verbunden, wobei deren Speichenköpfe und Speichennippel in naben- und felgenseitigen Aufnahmebohrungen eingesetzt sind. Da sich jedoch die letztgenannten Aufnahmebohrungen im Bereich des Felgenbettes befinden, müssen diese bei Verwendung eines schlauchlosen Reifens in mühevoller und zeitaufwendiger Weise abgedichtet werden.

Bei einem ferner aus der DE-A-30 28 827 bekannten, einen schlauchlosen Reifen aufweisenden Speichenrad besteht die Felge aus zwei im Bereich des Felgenbettes axial ineinandergeschobenen und miteinander verbundenen Felgenteilen, wobei am Felgenbett ein radialer Zwischenraum gebildet ist. Durch diesen können in den innenliegenden Felgenteil die Speichenköpfe ohne die Verwendung von Dichtmittel eingesetzt werden. Die zweiteilige Ausbildung der Felge ist jedoch sehr arbeitsaufwendig und diese daher teuer herzustellen. Ferner wird hierdurch das Gewicht des Speichenrads und damit auch das Gewicht der ungefederten Massen erhöht.

Aufgabe der Erfindung ist es daher, ein Speichenrad der im Oberbegriff des Patentanspruchs genannten Gattung derart auszubilden, daß es mit geringem Fertigungsaufwand hergestellt und insbesondere unter Verzicht auf zusätzliche, sein Gewicht erhöhende Elemente speziell für einen schlauchlosen Reifen verwendet werden kann.

Zur Lösung der Aufgabe sind die im kennzeichnenden Teil des Patentanspruchs dargelegten Merkmale vorgesehen.

Ein wesentlicher Vorteil der Erfindung ist darin zu sehen, daß die Felge zur Verwendung eines schlauchlosen Reifens sehr einfach und damit kostengünstig herstellbar ist, denn es brauchen nur die ohnehin zu bohrenden Aufnahmebohrungen in den Felgenhörnern gebohrt zu werden.

Ein Ausführungsbeispiel der Erfindung ist in der ein Speichenrad im Schnitt veranschaulichenden Zeichnung dargestellt und wird im folgenden erläutert. Zur besseren Veranschaulichung sind dabei die Speichen in Schnittebene gezeichnet.

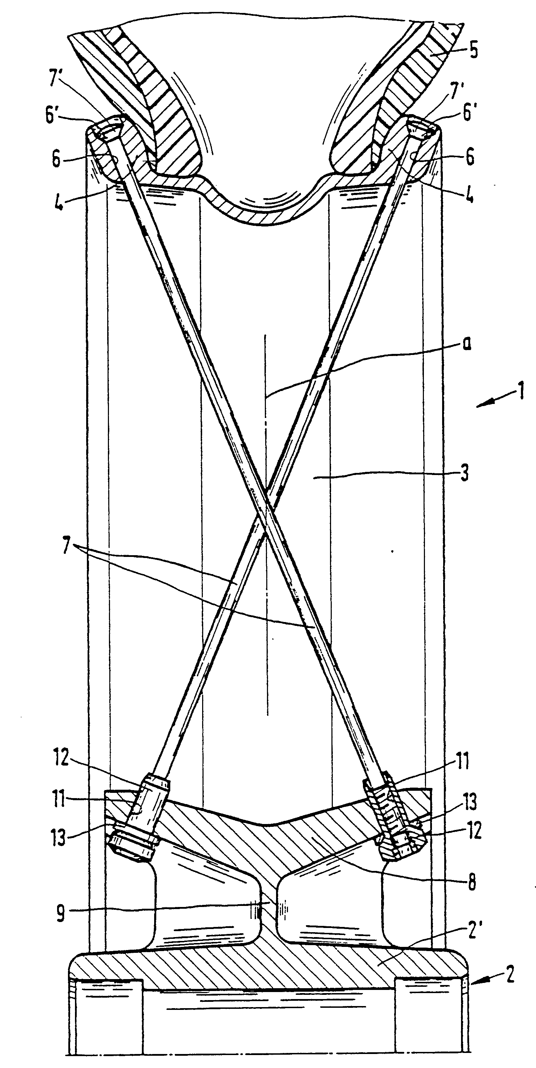

Das in der Zeichnung dargestellte Speichenrad 1 besteht im wesentlichen aus einer Nabe 2 und einer Felge 3, die zwischen ihren beiden Felgenhörnern 4 einen schlauchlosen Reifen 5 trägt. Die beiden relativ breiten Felgenhörner 4 sind jeweils von einer Anzahl von in gleichgroßem oder ungleichgroßem Winkelabstand angeordneten Aufnahmebohrungen 6 durchsetzt, in denen jeweils eine Speiche 7 angeordnet ist ; die Aufnahmebohrungen 6 verlaufen dabei derart schräg zur Felgenmittelebene a hin, daß sich die Speichen 7 in deren Bereich kreuzen. Ferner haben die Speichen 7 jeweils einen Speichenkopf 7', die sich jeweils in einer Aussenkung 6' der Aufnahmebohrungen 6 befinden.

Die Radnabe 2 hat einen den Außenumfang ihres Nabenkörpers 2' konzentrisch und mit radialem Abstand umgebenden Befestigungsring 8 mit firstförmigem Querschnittsprofil, dessen dem Nabenkörper 2' zugewandter Firstbereich mit diesem durch eine umlaufende Verbindungsrippe 9 verbunden ist ; diese befindet sich ebenso wie der Firstbereich des Befestigungsrings 8 im Bereich der Felgenmittelebene a. Der Befestigungsring 8 kann unlaufend oder wie in vorliegendem Ausführungsbeispiel abschnittsweise ausgebildet sein, wobei jeweils ein Ringabschnitt zur Aufnahme von zwei Speichenpaaren dient. An den beiden außenliegenden Rändern des Befestigungsringes 8 sind jeweils schräg zur Felgenmittelebene a verlaufende Durchgangsbohrungen 11 vorgesehen, in die jeweils ein mit einem Innensechskant versehener Speichennippel 12 eingesetzt ist, die unter Zwischenlage einer Beilagscheibe 13 auf den am freien Endabschnitt der Speichen 7. welche jeweils zum schräg gegenüberliegenden Felgenhorn 4 verlaufen — vorgesehenen Gewindeabschnitt aufgeschraubt sind. Somit ist die Radnabe 2 über die sich paarweise kreuzenden Speichen 7 konzentrisch mit der Felge 3 verbunden. Diese kann durch die in ihren Felgenhörnern 4 vorgesehenen Aufnahmebohrungen 6 für die Speichen 7 einen schlauchlosen Reifen 5 tragen.

## Patentanspruch

Speichenrad (1), im wesentlichen bestehend aus einer Radnabe (2) und einer einteiligen Felge (3), welche miteinander über eine Anzahl von Speichen (7) verbunden sind, deren Speichenköpfe (7') oder Speichennippel (12) jeweils in Aufnahmebohrungen (6) eingesetzt sind, dadurch gekennzeichnet, daß die Aufnahmebohrungen (6) in den Felgenhörnern (4) angeordnet sind.

## Claim

A spoked wheel (1) substantially comprising a hub (2) and a single-part rim (3) connected to the hub by a number of spokes (7) having spoke heads (7') or spoke nipples (12) which are inserted in respective bores (6), characterised in that the bores (6) are formed in the wheel flanges (4).

## Revendication

Roue à rayons (1), se composant principalement d'un moyeu de roue (2) et d'une jante (3) en une seule partie, reliés ensemble par un certain nombre de rayons (7), dont les têtes de rayons (7) ou les embouts de rayons (12) sont chaque fois introduits dans des alésages de réception (6), caractérisée en ce que les alésages de réception (6) sont disposés dans les bords de jante (4).